# EUROPEAN PATENT APPLICATION

(11) **EP 3 678 155 A1**
(43) Date of publication of application: **08.07.2020**
(21) Application number: 18852199.1
(22) Date of filing: 15.08.2018
(51) Int. Cl.: H01H 7/12, H02H 3/08, H01H 85/00

(54) **CIRCUIT BREAKER**

(30) Priority: 28.08.2017 CN 201721081366 U; 19.12.2017 CN 201721781270 U
(71) Applicant: BYD Company Limited, Shenzhen, Guangdong 518118 (CN)
(72) Inventor: WANG, Yin, Shenzhen, Guangdong 518118 (CN); LI, Huiao, Shenzhen, Guangdong 518118 (CN); LIU, Ziyue, Shenzhen, Guangdong 518118 (CN)
(74) Representative: Gulde & Partner
(86) International application number: PCT/CN2018/100693
(87) International publication number: WO 2019/042134

(57) **Abstract**

A circuit breaker includes a main protection circuit (100) connected in series in a protected circuit (300), an auxiliary protection circuit (200) connected in series in the protected circuit (300), where the main protection circuit (100) is connected in parallel to the auxiliary protection circuit (200), a mechanical disconnecting device, where the mechanical disconnecting device disconnects the main protection circuit (100) when an over-current occurs in the protected circuit (300), and a fusing device, where the fusing device is fused after the main protection circuit (100) is disconnected, to disconnect the protected circuit (300).

## Description

### CROSS-REFERENCE TO RELATED APPLICATIONS

This application claims priority to Chinese Patent Application No. 201721081366.1 filed on August 28, 2017, and Chinese Patent Application No. 201721781270.6 filed on December 19, 2017, which are incorporated by reference in their entireties.

### FIELD

The present disclosure relates to a circuit breaker.

### BACKGROUND

A circuit breaker is a common protection device. Existing circuit breakers generally include a current sensor, an electronic monitoring unit, a disconnecting device, and a fuse, and a circuit breaker disconnecting method thereof is that: The current sensor detects a current signal of a protected circuit and sends the current signal to the electronic monitoring unit, and when the protected circuit breaks down, the electronic monitoring unit sends out an ignition signal to detonate explosives, and the disconnecting device rapidly cuts off the fuse to achieve the purpose of disconnecting the circuit.

The circuit breaker can achieve the purpose of disconnecting the circuit, but has the following disadvantages in actual application: (1) The circuit breaker directly achieves the purpose of disconnecting the circuit in a manner of cutting off the fuse, does not take a good arc extinguishing measure, and has a risk of long arcing time in a process of disconnecting the circuit, and especially when the circuit is disconnected at high voltage, the purpose of effectively disconnecting the circuit cannot be achieved due to an excessively long arcing time. Consequently, circuit components of the protected circuit are damaged, and effective circuit protection cannot be implemented. (2) The electronic monitoring unit for fault detection in the existing circuit breakers generally adopts a sensor and an electronic circuit, on one hand, the costs are relatively high, and on the other hand, many intermediate links are added, the response speed is slow, and there are factors such as electromagnetic interferences or failures of electronic components. Consequently, incorrect operation or refusal to operate is easily caused, and security and reliability are relatively low.

### SUMMARY

To overcome the disadvantages of the prior art, the present disclosure provides a circuit breaker, to resolve the technical problems that the existing circuit breaker has a poor arc extinguishing effect, and relatively low security and reliability.

To resolve the foregoing technical problems, technical solutions adopted by the circuit breaker of the present disclosure are:
a circuit breaker, including:
a main protection circuit, where the main protection circuit is configured to be connected in series in a protected circuit;
an auxiliary protection circuit, where the auxiliary protection circuit is configured to be connected in series in the protected circuit where
the main protection circuit is connected in parallel to the auxiliary protection circuit;
a mechanical disconnecting device, where the mechanical disconnecting device is triggered when an over-current occurs in the protected circuit, to disconnect the main protection circuit; and
a fusing device, where the fusing device is connected in series in the auxiliary protection circuit, and is fused by the over-current after the main protection circuit is disconnected, to disconnect the auxiliary protection circuit, and further disconnect the protected circuit.

[The protected circuit further, [A1] the mechanical disconnecting device, the main protection circuit, and the auxiliary protection circuit are arranged from top to bottom.

Further, the mechanical disconnecting device includes an energy storage device, a driving mechanism, and an executing mechanism, the driving mechanism acts under the action of a power source provided by the energy storage device, the energy storage device is triggered when the over-current occurs in the protected circuit, to release the power source, and the executing mechanism is connected to the driving mechanism, and cuts off the main protection circuit under the driving of the driving mechanism.

Further, the energy storage device is a gas generator, the gas generator includes a gas production material and a gas generating medium that are placed in an installation groove, and the gas generating medium is triggered when the over-current occurs in the protected circuit, to enable the gas production material to produce gas.

Preferably, the gas production material is an explosive, the installation groove is an explosive installation groove, the gas generating medium is an explosive detonator connected to the explosive, and the explosive detonator is triggered when the over-current occurs in the protected circuit, to detonate the explosive.

Further, the explosive is sealed in the explosive installation groove by a sealing cover.

Further, the driving mechanism is a piston, and the piston includes an air cylinder in communication with the installation groove and a piston rod disposed in the air cylinder.

Further, the executing mechanism is an insulation blade disposed on the driving mechanism or integrally formed with the driving mechanism.

Further, the fusing device is a fuse, or the fusing device includes a fuse and an arc extinguishing structure.

Further, the main protection circuit includes a main circuit fuse disposed opposite to the mechanical disconnecting device, and the mechanical disconnecting device is triggered when the over-current occurs in the protected circuit, to cut off the main circuit fuse.

Further, the main circuit fuse is located on an upper side of an insulation base, and the fuse is located on a lower side of the insulation based, and is connected in parallel to the main circuit fuse by a connecting sheet.

Further, a resistance value of the fuse is more than 30 times that of the main circuit fuse.

Further, the circuit breaker includes a trigger device configured to trigger an action of the mechanical disconnecting device.

Further, the trigger device is an electric arc trigger device.

Based on the foregoing technical solutions, the circuit breaker of the present disclosure includes at least the following beneficial effects compared with the prior art: The main protection circuit and the auxiliary protection circuit are connected in parallel, so that when the over-current occurs in the protected circuit, on one hand, the mechanical disconnecting device can rapidly cut off the main protection circuit, and on the other hand, after the main protection circuit is disconnected, the over-current may all flow to the fusing device connected in series in the auxiliary protection circuit. Therefore, the fusing device can be rapidly fused, the auxiliary protection circuit can be disconnected, and the protected circuit can be further disconnected. In a process of disconnecting the auxiliary protection circuit and the protected circuit, arc extinguishing is performed, the electric arc extinguishing time is short, and the arc extinguishing effect is good. The entire size of the circuit breaker is relatively small, the current limiting capability is strong, the security is high, and the reliability is better, so that effective circuit protection can be implemented, and damage on the circuit components in the protected circuit can be avoided.

### BRIEF DESCRIPTION OF THE DRAWINGS

The foregoing and/or additional aspects and advantages of the present disclosure will become apparent and comprehensible in the description made to the embodiments with reference to the following accompanying drawings, where:
FIG. 1 is a schematic sectional view of a circuit breaker according to an embodiment of the present disclosure;
FIG. 2 is a schematic diagram of an assembly structure of the circuit breaker shown in FIG. 1;
FIG. 3 is an exploded view of the circuit breaker shown in FIG. 1; and
FIG. 4 is a circuit principle diagram of the circuit breaker shown in FIG. 1.

### Description of accompanying drawings symbols:

100: main protection circuit, 110: main circuit fuse, 200: auxiliary protection circuit, 210: fuse, 220: connecting sheet, 300: protected circuit, 411: explosive detonator, 412: explosive, 413: explosive installation groove, 421: piston rod, 422: air cylinder, 430: insulation blade, 510: sealing cover, 520: sealing structure, 600: enclosure, 700: insulation base, 710: groove, 720: thread connecting piece, and 800: electric arc trigger device.

### DETAILED DESCRIPTION

To make the technical problems, technical solutions and beneficial effects of the present disclosure more apparent and clearer, the following describes the present disclosure in further detail with reference to the accompanying drawings and embodiments. It should be understood that, specific embodiments described herein are merely used for explaining the present disclosure, but are not intended to limit the present disclosure.

In the descriptions of the present disclosure, it should be understood that the terms such as "first" and "second" are used only for the purpose of description, and should not be understood as indicating or implying the relative importance or implicitly specifying the number of the indicated technical features. Therefore, a feature limited by "first" or "second" may explicitly or implicitly include one or more of the features. In the descriptions of the present disclosure, "a plurality of' means two or more, unless otherwise definitely and specifically limited.

It should be understood that, orientations or location relationships indicated by terms such as "length", "width", "on", "below", "front", "back", "left", "right", "vertical", "horizontal", "top", "bottom", "inside", and "outside" are orientations or location relationships indicated based on the accompanying drawings, and are merely used for ease of describing the present disclosure and for ease of simplified descriptions, rather than for indicating or implying that an apparatus or an element must have a particular orientation or must be constructed or operated in a particular orientation, and therefore, cannot be construed as a limitation to the present disclosure.

In addition, it should be noted that when the element is called as "fixed on", or "disposed on" another element, the element may be directly on the another element or indirectly on the another element. When an element is called as "connected to" another element, the element may be directly connected to the another element or indirectly connected to the another element.

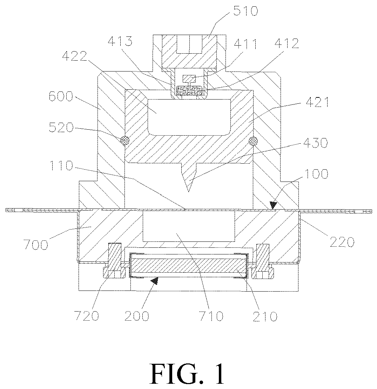

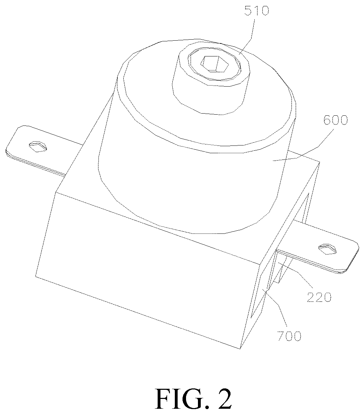

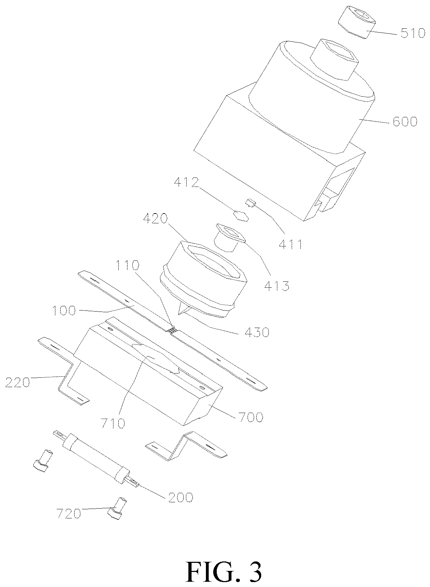

Referring to FIG. 1 to FIG. 4, a circuit breaker provided in an embodiment of the present disclosure includes:
a main protection circuit 100, where the main protection circuit 100 is configured to be connected in series in a protected circuit 300;
an auxiliary protection circuit 200, where the auxiliary protection circuit 200 is configured to be connected in series in the protected circuit 300, where
the main protection circuit 100 is connected in parallel to the auxiliary protection circuit 200;
a mechanical disconnecting device, where the mechanical disconnecting device is triggered when an over-current occurs in the protected circuit 300, to disconnect the main protection circuit 100; and
a fusing device, where the fusing device is connected in series in the auxiliary protection circuit 200[A2], and is fused by the over-current after the main protection circuit 100 is disconnected, to disconnect the auxiliary protection circuit 200, and further disconnect the protected circuit 300.

In the circuit breaker, the main protection circuit 100 and the auxiliary protection circuit 200 are connected in parallel, so that when the over-current occurs in the protected circuit 300, on one hand, the mechanical disconnecting device may rapidly cut off the main protection circuit 100, and on the other hand, after the main protection circuit 100 is disconnected, the over-current may all flow to the fusing device connected in series in the auxiliary protection circuit 200. Therefore, the fusing device can be rapidly fused, the auxiliary protection circuit 200 can be disconnected, and the protected circuit 300 can be further disconnected. In a process of disconnecting the auxiliary protection circuit 200 and the protected circuit 300, arc extinguishing is performed, the electric arc extinguishing time is short, and the arc extinguishing effect is good. The entire size of the circuit breaker is relatively small, the current limiting capability is strong, the security is high, and the reliability is better, so that effective circuit protection can be implemented, and damage on the circuit components in the protected circuit 300 can be avoided.

The over-current situation may be, for example, a short circuit situation, that is, a surge over-current, or an overload situation, that is, a slow changing over-current, which may cause overheat of the load. Such over-current situation may be clearly understood, and is not described in detail herein.

It should be understood that to ensure a disconnecting sequence of the main protection circuit 100 and the auxiliary protection circuit 200 when the over-current occurs in the protected circuit 300, in actual application, a resistance of the fusing device is much greater than that of the main protection circuit 100, and the resistance of the main protection circuit 100 is relatively small. In other words, in a normal situation, the main protection circuit 100 is configured to allow a current of the protected circuit 300 to flow through, and a branch current of the protected circuit 300 flowing to the auxiliary protection circuit 200 is relatively small.

Further, in this embodiment, the mechanical disconnecting device, the main protection circuit 100, and the auxiliary protection circuit 200 are arranged from top to bottom. Such structure helps the mechanical disconnecting device cut off the main protection circuit 100.

Further, in this embodiment, the mechanical disconnecting device includes an energy storage device, a driving mechanism, and an executing mechanism, the driving mechanism acts under the action of a power source provided by the energy storage device, the energy storage device is triggered when the over-current occurs in the protected circuit 300, to release the power source, and the executing mechanism is connected to the driving mechanism, and cuts off the main protection circuit 100 under the driving of the driving mechanism. In this way, the mechanical disconnecting device has advantages such as simple structure and convenient assembly on the premise of effectively cutting off the main protection circuit 100 during the over-current.

Further, in this embodiment, the energy storage device is a gas generator, the gas generator includes a gas production material and a gas generating medium placed in an installation groove, and the gas generating medium is triggered when the over-current occurs in the protected circuit 300, to enable the gas production material to produce gas. It is simple and convenient to use a large amount of gas produced by the gas production material as the power source.

As a preferred embodiment of the present disclosure, the gas production material is preferably an explosive 412, and a corresponding installation groove is an explosive installation groove 413. The gas generating medium is an explosive detonator 411 connected to the explosive 412, and the explosive detonator 411 detonates the explosive 412 when the over-current occurs in the protected circuit 300. By means of larger energy produced by explosion of the explosive 412, larger power may be provided for the driving mechanism to better drive the executing mechanism to rapidly cut off the main protection circuit 100, thereby further improving the reliability of circuit protection.

Further, in this embodiment, the explosive 412 is sealed in the explosive installation groove 413 by a sealing cover 510. The sealing cover 510 is disposed to help prevent the explosive 412 from oxidative decomposition due to the influence of an external environment, thereby improving the service life of the circuit breaker, and further improving the reliability of the circuit protection.

Further, in this embodiment, the driving mechanism is a piston, and the piston includes an air cylinder 422 in communication with the explosive installation groove 413 and a piston rod 421 disposed in the air cylinder 422. When the explosive 413 is ignited by the explosive detonator 411, the produced strong air flow and heat energy may rapidly enter the inside of the air cylinder 422, to push the piston rod 421 to move rapidly to drive the executing mechanism to cut off the main protection circuit 100. The piston may convert the energy produced after the explosive 412 is ignited into a relatively large mechanical force for driving the executing mechanism to cut off the main protection circuit 100, and has a reset function, which helps reuse the circuit breaker after the main protection circuit 100 and the auxiliary protection circuit 200 are replaced. Structure stability and reliability of the piston are better, and the installation is convenient.

In actual application, the circuit breaker provided in the embodiment of the present disclosure includes an enclosure 600 and an inner cavity defined by an enclosure body. The piston rod 421 and the explosive installation groove 413 may be adapted to be installed in the inner cavity in sequence. The piston may form the air cylinder 422 by means of an inner wall of the enclosure 600 and a groove wall of the explosive installation groove 413, that is, the air cylinder 422 may be provided by the inner cavity, thereby further simplifying the structure, and improving the compactness of the entire structure. The sealing groove may be adapted to be installed in the inner cavity or cover an outer wall of the enclosure 600 to keep the inner cavity sealed. A sealing structure 520 is preferably disposed between the piston rod 421 and an inner wall of the enclosure 600 to improve the tightness of the air cylinder 422, so as to prevent the strong air flow produced after the explosive 412 is ignited from leaking from a gap between the inner wall of the enclosure 600 and the piston rod 421, thereby avoiding affecting the driving effect of the piston rod 421 on the executing mechanism. The sealing structure 520 may be an existing sealing ring.

Certainly, the mechanical disconnecting device may also be an existing contact disconnecting device or a tripping device. The energy storage device and the driving mechanism may be provided by a spring.

Specifically, in this embodiment, the executing mechanism is an insulation blade 430 disposed on the driving mechanism or integrally formed with the driving mechanism. It should be understood that the insulation blade 430 is disposed opposite to the main protection circuit 100, so as to rapidly and accurately cut off the main protection circuit 100 under the driving of the driving mechanism (which is specifically the piston rod 421 of the piston in this embodiment).

The enclosure 600, the explosive installation groove 413, and the piston rod 421 are an insulation structure.

Certainly, the energy storage device may also be an existing mechanical energy storage or electromagnetic energy storage, another electrochemical energy storage device, or the like. The gas production material certainly may also be another existing chemical compound.

Further, in this embodiment, the main protection circuit 100 includes a main circuit fuse 110 disposed opposite to the mechanical disconnecting device. The mechanical disconnecting device (which is specifically the executing mechanism of the mechanical disconnecting device, and in this embodiment, the executing mechanism is specifically the insulation blade 430) is triggered when the over-current occurs in the protected circuit 300, to cut off the main circuit fuse 110. The fusing device is a fuse 210, or the fusing device includes a fuse 210 and an arc extinguishing structure. Specifically, the main circuit fuse 110 is disposed opposite to the insulation blade 430. When the protected circuit 300 is abnormal, the main circuit fuse 110 may be cut off rapidly by the insulation blade 430, a current is forced to instantly transfer to the auxiliary protection circuit 200 in which the fuse 210 is located, and the fuse 210 is rapidly fused, thereby achieving the purpose of cutting off a fault circuit completely. When the fusing device only includes the fuse 210, the fuse 210 is preferably an existing arc extinguishing structure. Certainly, the fusing device may also include the fuse and the arc extinguishing structure that are disposed respectively.

Further, in this embodiment, the main circuit fuse 110 is located on an upper side of an insulation base 700, and the fuse is located on a lower side of the insulation base 700, and is connected in parallel to the main circuit fuse 110 by a connecting sheet 220. The insulation base 700 is disposed to facilitate the positioning and installation of the main circuit fuse 110 and the fuse 210. In actual installation, the fuse 210 may be fixedly connected to the connecting sheet 220 by a thread connecting piece 720. The connecting sheet 220 may be fixedly connected to the main circuit fuse 110 in a manner of brazing or crimping.

Preferably, to enable the insulation blade 430 to more conveniently, rapidly, and effectively cut off the main circuit fuse 110, a groove 710 disposed opposite to the main circuit fuse 110 may be further disposed on the insulation base 700, that is, the main circuit fuse 110 is stretched and suspended on the groove 710.

Further, in this embodiment, to ensure the normal operation of the protected circuit 300, a branch in which the main circuit fuse 110 is located bears almost all the circuit current, and a branch in which the fuse 210 is located barely bears the current. However, when the over-current occurs in the protected circuit 300, the main circuit fuse 110 is disconnected after the fuse 210[A3]. A resistance value of the fuse 210 is more than 30 times that of the main circuit fuse 110. In addition, a fusing feature of the fuse 210 should also ensure that the fuse 210 is arcing after the main circuit fuse 110 is cut off completely.

In the circuit breaker provided in the embodiment of the present disclosure, the enclosure 600 is made of ceramic, bakelite, plastic or other existing insulation materials with relatively high hardness and good insulation effects. The piston rod 421, the insulation blade 430, and the insulation base 700 are made of ceramic, bakelite, plastic, fiber or other existing insulation materials with good insulation effects, high temperature resistance, and good hardness. The materials of the main circuit fuse 110, the fuse 210, and the connecting sheet 220 are not limited to conductive materials of silver, copper, aluminum or silver copper alloy.

Further, in this embodiment, the circuit breaker further includes a trigger device configured to trigger an action of the mechanical disconnecting device. Specifically, the following may be adopted.

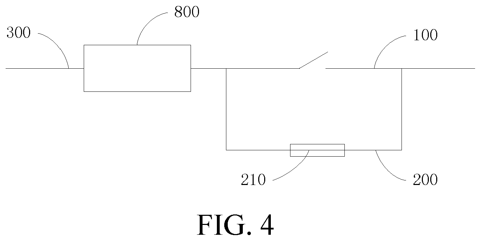

The main protection circuit 110, the auxiliary protection circuit 200, and the trigger device are arranged in a parallel-series structure. Referring to FIG. 4, the main protection circuit 100 and the auxiliary protection circuit 200 that are connected in parallel are connected in series to the trigger device. The trigger device is preferably an electric arc trigger device 800. By using the electric arc trigger device 800 that may use a heat effect of the current in the protected circuit 300 as a means of abnormal circuit detection, a current collection and control module in the circuit is reduced, the explosive detonator 411 can be rapidly triggered, the response speed is fast, and the possibility of incorrect operation or refusal to operate caused by electromagnetic interferences or failures of electronic components can be effectively avoided.

The foregoing circuit breaker provided in the embodiment of the present disclosure is suitable for protecting electrical equipment and protecting batteries, and especially suitable for protecting electrical equipment and batteries in an electric car.

The foregoing descriptions are merely preferred embodiments of the present disclosure, and are not intended to limit the present disclosure. Any modification, equivalent replacement, or improvement made without departing from the spirit and principle of the present disclosure shall fall within the protection scope of the present disclosure.

## Claims

1. A circuit breaker, comprising:
a main protection circuit, wherein the main protection circuit is configured to be connected in series in a protected circuit;
an auxiliary protection circuit, wherein the auxiliary protection circuit is configured to be connected in series in the protected circuit, wherein
the main protection circuit is connected in parallel to the auxiliary protection circuit;
a mechanical disconnecting device, wherein the mechanical disconnecting device is triggered when an over-current occurs in the protected circuit, to disconnect the main protection circuit; and
a fusing device, where the fusing device is connected in series in the auxiliary protection circuit, and is fused by the over-current after the main protection circuit is disconnected, to disconnect the auxiliary protection circuit, and further disconnect the protected circuit.

2. The circuit breaker according to claim 1, wherein the mechanical disconnecting device, the main protection circuit, and the auxiliary protection circuit are arranged from top to bottom.

3. The circuit breaker according to claim 1, wherein the mechanical disconnecting device comprises an energy storage device, a driving mechanism, and an executing mechanism, the driving mechanism acts under the action of a power source provided by the energy storage device[A4], the energy storage device is triggered when the over-current occurs in the protected circuit, to release the power source, and the executing mechanism is connected to the driving mechanism, and cuts off the main protection circuit under the driving of the driving mechanism.

4. The circuit breaker according to claim 3, wherein the energy storage device is a gas generator, the gas generator comprises a gas production material and a gas generating medium that are placed in an installation groove, and the gas generating medium is triggered when the over-current occurs in the protected circuit, to enable the gas production material to produce gas.

5. The circuit breaker according to claim 4, wherein the gas production material is an explosive, the installation groove is an explosive installation groove, the gas generating medium is an explosive detonator connected to the explosive, and the explosive detonator is triggered when the over-current occurs in the protected circuit, to detonate the explosive.

6. The circuit breaker according to claim 5, wherein the explosive is sealed in the explosive installation groove by a sealing cover.

7. The circuit breaker according to claim 4, wherein the driving mechanism is a piston, and the piston comprises an air cylinder in communication with the installation groove and a piston rod disposed in the air cylinder.

8. The circuit breaker according to claim 3, wherein the executing mechanism is an insulation blade disposed on the driving mechanism or integrally formed with the driving mechanism.

9. The circuit breaker according to claim 1, wherein the fusing device is a fuse, or the fusing device comprises a fuse and an arc extinguishing structure.

10. The circuit breaker according to claim 9, wherein the main protection circuit comprises a main circuit fuse disposed opposite to the mechanical disconnecting device, and the mechanical disconnecting device is triggered when the over-current occurs in the protected circuit, to cut off the main circuit fuse.

11. The circuit breaker according to claim 10, wherein the main circuit fuse is located on an upper side of an insulation base, and the fuse is located on a lower side of the insulation base, and is connected in parallel to the main circuit fuse by a connecting sheet.

12. The circuit breaker according to claim 10, wherein a resistance value of the fuse is more than 30 times that of the main circuit fuse.

13. The circuit breaker according any one of claims 1 to 12, wherein the circuit breaker comprises a trigger device configured to trigger an action of the mechanical disconnecting device.

14. The circuit breaker according to claim 13, wherein the trigger device is an electric arc trigger device.
